(19) Europäisches Patentamt
European Patent Office
Office européen des brevets

(11) Veröffentlichungsnummer: **0 446 444 A1**

# (12) EUROPÄISCHE PATENTANMELDUNG

(21) Anmeldenummer: **90123540.8**

(22) Anmeldetag: **07.12.90**

(51) Int. Cl.[5]: **C08K 5/5333**, C08L 67/02, //(C08L67/02,27:18,101:00), (C08L67/02,27:18,85:02,101:00)

(30) Priorität: **10.03.90 DE 4007730**

(43) Veröffentlichungstag der Anmeldung: **18.09.91 Patentblatt 91/38**

(84) Benannte Vertragsstaaten: **DE FR GB IT**

(71) Anmelder: **BAYER AG**
**W-5090 Leverkusen 1 Bayerwerk(DE)**

(72) Erfinder: **Fuhr, Karl, Dr.**
**Krüllsdyk 55**
**W-4150 Krefeld(DE)**
Erfinder: **Müller, Friedemann, Dr.**
**Am Steinacker 5**
**W-4040 Neuss 21(DE)**
Erfinder: **Ott, Karl-Heinz, Dr.**
**Paul-Klee-Strasse 54**
**W-5090 Leverkusen 1(DE)**

## (54) Flammgeschützte, nicht tropfende Polyalkylenterephthalat-Formmassen.

(57) Die erfindungsgemäßen Polyalkylenterephthalat-Formmassen basieren auf einem Polyphosphonsäureester, einem Antidripping-Mittel und einem Thermoplasten mit überwiegend aromatischer Hauptkette und hoher Wärmeformbeständigkeit und zeichnen sich durch eine hohe Flammfestigkeit aus. Die Mitverwendung von Thermoplasten mit überwiegend aromatischer Hauptkette und hoher Wärmeformbeständigkeit erlaubt eine deutliche Verringerung der nach der Klassifikation V-0/UL94 benötigten Mengen an phosphorhaltigen Verbindungen. Die erfindungsgemäßen Formmassen können zur Herstellung von Formkörpern verwendet werden.

EP 0 446 444 A1

Gegenstand der Erfindung sind flammgeschützte, nicht tropfende Polyalkylenterephthalat-Formmassen, die Polyphosphonsäureester, Antidripping-Mittel, Thermoplaste mit überwiegend aromatischer Hauptkette und hoher Wärmeformbeständigkeit (Vicat B ≧180 ° C) sowie gegebenenfalls Verstärkungsmittel und weitere Additive enthalten.

Aus der DE-OS 2 458 967 sind flammwidrige Polyestermassen bekannt, die ein Polyalkylenterephthalat, das in der Hauptkette Bindungseinheiten basierend auf bromierten aromatischen Verbindungen besitzt, sowie hochmolekulare organische Phosphorverbindungen enthalten. Die in der DE-OS 2 458 967 beschriebenen Polyestermassen besitzen den Nachteil, daß sie cokondensiert stets organisch gebundenes Brom enthalten (Gefahr der Dioxinbildung bei Brand) und, da es sich um Cokondensate handelt, wesentlich schwieriger herzustellen sind.

Aus der DE-OS 2 253 207 sind flammhemmende thermoplastische Polyesterharzzusammensetzungen bekannt, die als flammhemmenden Zusatzstoff Arylphosphonate enthalten. Aus der DE-OS 2 111 202 sind ebenfalls flammwidrige thermoplastische Polyester-Formmassen mit Polyarylphosphonaten bekannt. Die in diesen beiden Offenlegungsschriften beschriebenen flammhemmenden thermoplastischen Polyester-Formmassen zeigen jedoch den hohen Grad von Flammwidrigkeit gemäß Klassifikation V-0 nach UL 94, wie er für den technischen Einsatz gefordert wird, nur in Dosierungen, die andere Produkteigenschaften beeinträchtigen.

Aus der DE-OS 2 132 350 sind phosphorhaltige Polyalkylenterephthalat-Formmassen mit flammwidrigen Eigenschaften bekannt, die als phosphorhaltige Zusätze sowohl Polyalkylphosphonate als auch Polyarylphosphonate enthalten können. In der genannten DE-OS 2 132 350 werden ferner Polyesterpreßharzmischungen aus Polypropylenterephthalat oder Polybutylenterephthalat beansprucht (Ansprüche 7 bis 10), die verstärkende Füllstoffe, wie Glasfasern, und Polyphosphonat oder Polyphosphonatphosphat enthalten. Die verstärkten Polyalkylenterephthalat-Preßharzmischungen zeigen mit diesen phosphorhaltigen Zusätzen keine ausreichende flammhemmende Brandschutzeigenschaft, da das Problem des Tropfens im Brandfall nicht gelöst ist. Außerdem besitzen die im vorgenannten Stand der Technik flammwidrig ausgestatteten Polyesterformmassen den Nachteil, daß sie um der geforderten Klassifikation nach UL-94 nachzukommen, einen relativ hohen Phosphorgehalt besitzen, was auch auf Kosten der Wärmeformbeständigkeit geht.

Gegenstand der Erfindung sind daher flammgeschützte, nicht tropfende Polyalkylenterephthalatformmassen, die auf 100 Gew.-Teile dieser Formmassen neben Polyalkylenterephthalat

A) 5 bis 30 Gew.-Teile, vorzugsweise 10 bis 25 Gew.-Teile Polyphosphonsäureester der Formel

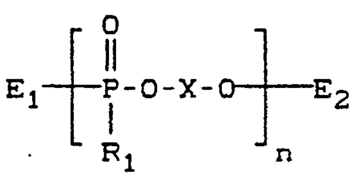

(I) ,

worin

$R_1$ für $C_1$ - bis $C_6$-Alkyl oder $C_6$- bis $C_{10}$-Aryl steht,

X für die Formel

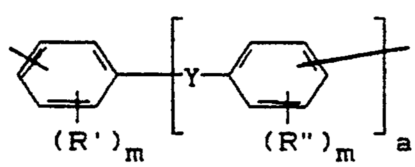

(II)

steht,

in der

R' und R"

gleich oder verschieden sind und für $C_1$- bis $C_4$-Alkyl oder -Alkoxy stehen,

Y

eine Einfachbindung ist oder $C_1$- bis $C_3$-Alkylen, gegebenenfalls niederalkylsubstituiertes $C_5$- bis $C_{12}$-Cycloalkylen oder O, S, CO, $SO_2$ bedeutet,

m

für Null oder ganze Zahlen von 1 bis 4, bevorzugt 2, steht und

a

0 oder 1, bevorzugt 1, bedeutet,

$E_1$ für $-OR_2$, -OH, -O-X-OH steht, wobei

$R_2$

für $C_6$- bis $C_{10}$-Aryl steht und X die obengenannte Bedeutung besitzt,

$E_2$ Wasserstoff,

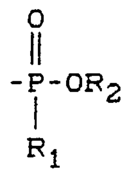

oder

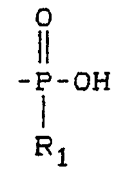

bedeutet,

wobei

$R_1$ und $R_2$ die obengenannte Bedeutung haben und

n für ganze Zahlen von 2 bis 100 steht,

B) 0,2 bis 2 Gew.-Teile, vorzugsweise 0,4 bis 0,8 Gew.-Teile eines Antidripping-Mittels und

C) 1 bis 30 Gew.-Teile, vorzugsweise 5 bis 25 Gew.-Teile eines Thermoplasten mit überwiegend aromatischer Hauptkette und hoher Wärmeformbeständigkeit (Vicat B $\geq$180 °C)

enthalten.

Als Alkylreste in den obigen Formeln werden besonders erwähnt Methyl, Ethyl, Propyl, Butyl sowie die entsprechenden Isomeren, als Arylreste Phenyl und Naphthyl und als Alkoxyreste Methoxy und Ethoxy.

Bevorzugt werden als Komponente A Polyphosphonate der Formel (III)

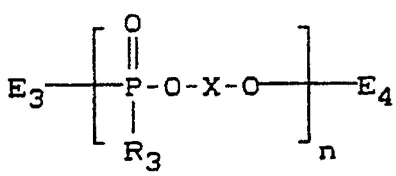
(III)

eingesetzt,

worin

X für gegebenenfalls durch $C_1$- bis $C_4$-Alkyl substituiertes Phenylen, Bisphenylen, Bisphenylen-($C_1$- bis $C_3$)alkan, Bisphenylen-($C_5$- bis $C_{12}$)cycloalkan, Sulfonylbisphenylen, Oxobisphenylen, Thiobisphenylen oder Carbonylbisphenylen steht,

$R_3$ Methyl, Ethyl oder Phenyl bedeutet,

$E_3$

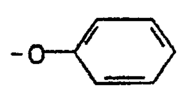
,

-OH, -O-X-OH bedeutet

und X die obengenannte Bedeutung hat,

$E_4$ für Wasserstoff,

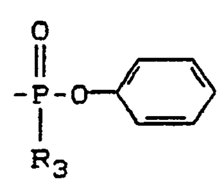

oder

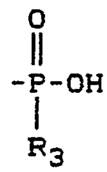

steht, und $R_3$ die obengenannte Bedeutung besitzt,
und

n für ganze Zahlen von 5 bis 80 steht.

Ganz besonders bevorzugt werden Polyphosphonsäureester eingesetzt, die der allgemeinen Formel (III) entsprechen und in der

$R_3$ Methyl oder Phenyl bedeutet,

$E_3$ für O-Phenyl steht,

$E_4$

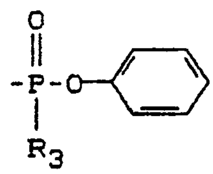

bedeutet,

n eine ganze Zahl von 5 bis 80 ist und

X die obige Bedeutung hat.

Die Polyalkylenterephthalate im Sinne der Erfindung sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexandimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(ß-hydroxyethoxy)-benzol, 2,2-Bis-(4-hydroxycyclohexyl)propan, 2,4-Dihydroxy-1,1,3,3-tetramethyl-cyclobutan, 2,2-Bis-(4-ß-hydroxyethoxyphenyl)-propan und 2,2-Bis(4-hydroxypropoxyphenyl)-propan (DE-OS 2 407 674, 2 407 776, 2 715 932).

Die Polyalkylenterephthalate Können durch Einbau relativ kleiner Mengen 3- oder 4-wertiger Alkohole oder 3- oder 4-basischer Carbonsäuren, z.B. DE-OS 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Bevorzugte Mischungen enthalten 1 bis 50 Gew.%, vorzugsweise 1 bis 30 Gew.-%, Polyethylenterephthalat und 50 bis 99 Gew.%, vorzugsweise 70 bis 99 Gew.-%, Polybutylenterephthalat.

Die vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/ o-Dichlorbenzol (1:1 Gew.-Tl.) bei 25 °C im Ubbelohde-Viskosimeter.

Die Polyalkylenterephthalate lassen sich nach bekannten Methoden herstellen (siehe z.B. Kunststoff-Handbuch, Band VIII, S. 695 ff ., Carl Hanser Verlag, München 1973).

Die einzusetzenden Polyphosphonsäureester der Formel (I) sind bekannt und beispielsweise beschrieben in US 2 682 522, DE-OS 2 925 207 oder DE-OS 2 944 093.

Als Polyphosphonate seien beispielsweise Hydrochinonpoly-methylphosphonat, Dihydroxydiphenyl-poly-methylphosphonat, Bisphenol-F-poly-methylphosphonat, Bisphenol-F-poly-phenylphosphonat, Bisphenol-A-poly-methylphosphonat, Dihydroxydiphenylsulfon-polymethylphosphonat sowie Tetramethyldioxidiphenyl-poly-methylphosphonat, Tetramethylbisphenol-F-poly-methylphosphonat, Tetramethylbisphenol-F-poly-phenylphosphonat, Tetramethylbisphenol-A-poly-methylphosphonat und Tetramethyldioxidiphenylsulfon-poly-methylphosphonat genannt.

Besonders bevorzugt sind die Polymethyl- und Polyphenylphosphonate von Hydrochinon, 4,4'-Dihydroxydiphenyl, Bisphenol F und Bisphenol A, sowie Phosphonate aus Mischungen dieser Bisphenole.

Die erfindungsgemäß einzusetzenden Polyphosphonate besitzen im allgemeinen eine relative Lösungsviskosität von 1,05 (entsprechend einer mittleren Molmasse von 2000 (ca. 8 Monomereinheiten)) bis 1,40 (entsprechend einer mittleren Molmasse von 22 000 (ca. 90 Monomereinheiten)). Die Messung der Lösungsviskosität erfolgt in Methylenchlorid (0,5 g/100 ml Lösung) bei 25 °C.

Als Komponente B können eingesetzt werden Tetrafluorethylenpolymerisate, kolloidales Siliciumoxid und/oder Silicone. Diese Verbindungen fungieren als sogenannte Antidripping-Mittel.

Bevorzugt werden als Komponente B) Tetrafluorethylenpolymerisate mit Fluorgehalten von 65 bis 76 Gew.%, besonders bevorzugt 70 bis 76 Gew.-% eingesetzt. Beispiele sind Polytetrafluorethylen, Tetrafluorethylen-Hexafluorpropylen-Copolymere, Tetrafluorethylen-Difluorethylen-Copolymere oder Tetrafluorethylen-Copolymerisate mit geringen Mengen fluorfreier copolymerisierter ethylenisch ungesättigter Monomerer. Die Polymerisate sind bekannt. Sie können in feinteiliger Form, gewöhnlich als Pulver, auch gefällt auf Trägermaterial, z.B. auf Basis von Polyalkylenterephthalat oder Füllstoffen, verwendet werden. Sie können nach bekannten Verfahren hergestellt werden, so z.B. durch Polymerisation von Tetrafluorethylen in wäßrigem Medium mit einem freie Radikale bildenden Katalysator, z.B. Natrium-, Kalium- oder Ammoniumperoxidisulfat bei Drucken von 7- 71 $kg/cm^2$ und bei Temperaturen von 0 -200 °C, vorzugsweise bei Temperaturen von 20 bis 100 °C (nähere Einzelheiten s. z.B. US-Patent 2 393 967).

Die erfindungsgemäß geeigneten Polytetrafluorethylene sollen vorzugsweise Gewichtsmittelmolekulargewichte $\overline{M}_w$ zwischen $10^5$ und $10^6$ haben.

Die Tetrafluorethylen-Polymerisate werden bevorzugt in nicht gesinterter Form zugesetzt.

Als Komponente C der erfindungsgemäßen Polyalkylenterephthalat-Formmassen kommen in Frage Thermoplasten mit überwiegend aromatischer Hauptkette und mit hoher Wärmeformbeständigkeit (Vicat B ≥180 °C). Solche Thermoplasten sind beispielsweise Polysulfone, Polyethersulfone, Polyketone, Polyetherketone, Polyphenylenoxide und Polyarylensulfide. Diese Thermoplasten können selbstverständlich allein oder in Mischung untereinander eingesetzt werden, wobei das jeweilige Mischungsverhältnis leicht durch Vorversuche zu ermitteln ist und vom Einsatz- und Verwendungszweck der erfindungsgemäßen Formmassen abhängt. Diese Thermoplasten sind literaturbekannt und können nach den bekannten Verfahren hergestellt werden.

Weiterhin können den erfindungsgemäßen Formmassen alle bekannten Verstärkungsmittel und Polymerzusatzstoffe bzw. -hilfsstoffe zugegeben werden. Die Menge dieser Additive richtet sich nach der jeweiligen Verwendung der Polymerformmassen. Die günstigste Menge kann leicht durch Vorversuche ermittelt werden. Als Zusatzstoffe werden anorganische Füllstoffe, Verstärkungsmittel, Pigmente und/oder Kristallisationshilfsmittel, weitere Flammschutzmittel, wie Stickstoff-, Halogen- und/oder andere Phosphorverbindungen, Verarbeitungshilfsmittel, wie Entformungsmittel, Stabilisatoren, Fließmittel, UV-, Licht- und Thermostabilisatoren, bekannte Schlagzähigkeits- und/oder Verträglichkeitsverbesserer genannt.

Üblicherweise werden etwa 0,1 bis 40 Gew.-Teile, bevorzugt 5 bis 30 Gew.-Teile, an anorganischen Füllstoffen, Verstärkungsmittel, Pigmenten und/oder Kristallisationshilfsmittel zugesetzt. Die genannten weiteren Flammschutzmittel werden in Mengen von ca. 0,1 bis 20 Gew.-Teilen, vorzugsweise 3 bis 15 Gew.-Teilen, zugesetzt. Die Entformungsmittel, Stabilisatoren, Fließhilfsmittel, Farbmittel werden in Mengen von ca. 0,5 bis 5 Gew.-Teilen, vorzugsweise 1 bis 3 Gew.-Teilen, zugesetzt und die UV-, Licht-und Thermostabilisatoren, bekannte Schlagzähigkeits- und/oder Verträglichkeitsverbesserer in Mengen von etwa 0,1 bis 20 Gew.-Teilen, vorzugsweise 5 bis 15 Gew.-Teilen.

Die gegebenenfalls einsetzbaren Verstärkungsmittel umfassen alle für die Verstärkung von Polyalkylenterephthalaten bekannten Mittel, z.B. werden genannt: Glasfasern, Glaskugeln und/oder mineralische Füllstoffe, wie in Katz und Milewski, "Handbook of Fillers and Reinforcements for Plastics", Nostrand-Verlag,

1978, beschrieben. Bevorzugt werden als anorganische Verstärkungsmittel Glasfasern eingesetzt. Die eingesetzten Glasfasern besitzen im allgemeinen einen Durchmesser von etwa 6 bis 15 μm, bevorzugt 8 bis 13 μm, und ein Längenzu Dicken-Verhältnis von größer als 45, bevorzugt 50 bis 200 μm.

Als weitere Füll- und Verstärkungsstoffe, Farbpigmente bzw. Farbmittel kommen Mikroglaskugeln, Kohlefasern, Kreide, andere Erdalkalimetallcarbonate, Erdalkalimetalloxide, Quarz wie Novaculit, Silikate wie Asbest, Feldspat, Glimmer, Talkum, Wollastonit und Kaolin in kalzinierter und nicht kalzinierter Form sowie als Pigmente z.B. Titandioxid und/oder Zinksulfid in Frage. Die eingesetzten mineralischen Füllstoffe besitzen mittlere Teilchendurchmesser von weniger als 20 μm, bevorzugt weniger als 10 μm, insbesondere 2 bis 8 μm. Sie können in geeigneter Weise oberflächenmodifiziert sein, z.B. mit Silanen behandelt sein.

Als Kristallisationshilfsmittel kommen z.B. in Frage anorganische kristalline, hochschmelzende Verbindungen, die als Nukleierungsmittel wirksam sind, wie Mikro-Talk, Metallsalze von aliphatischen und/oder aromatischen nieder- oder hochmolekularen Carbonsäuren, die in WO 85/03717, EP 0 029 285, EP 0 037 666, EP 0 034 773, EP 0 112 167, EP 0 021 648, EP 0 102 768 beschrieben sind sowie Metallsalze von aliphatischen und/oder aromatischen Sulfonsäuren (EP 178 807).

Als weitere Flammschutzmittel können bromhaltige Verbindungen wie Hexabrombenzol, Pentabromtoluol, Octa- und Decabromdiphenyl, Octa- und Decabromdiphenylether, Hexabrom-bis-phenoxyethan, Ethylenbis-tetrabromphthalimid und deren Gemische sowie bromierte Polystyrole (Pyro-Check-Typen der Ferro Corp., USA), bromiertes Polyphenylenoxid (Great Lakes P0-64 P der Great Lakes Chem. Corp., USA) verwendet werden.

Für die Flammschutzmittelkombinationen eignen sich besonders organische Phosphorverbindungen, wie Phosphate und andere Phosphonate. Bevorzugt sind aromatische Phosphate, z.B. Triphenylphosphat und Dikresylphenylphosphat, außerdem Phosphonate, wie Diphenylmethylphosphonat und Dikresylphenylphosphonat.

Als weitere Flammschutzmittel können Metalloxide, z.B. Antimon(III)-oxid, Blei(IV)-oxid, Cer(IV)-oxid, Kupfer(II)-oxid, Molybdän(VI)-oxid, Vanadium(V)-oxid, Wismut(III)-oxid, Wolfram(VI)-oxid, Zinn(IV)-oxid und Zirkon(IV)-oxid, Zinkborat (Hydrate) sowie deren Mischungen zugesetzt werden.

Als Verarbeitungshilfsmittel können den erfindungsgemäßen Formmassen die bekannten Entformungsmittel, Stabilisatoren und Fließhilfsmittel zugesetzt werden.

Als Entformungsmittel können Esterwachse, z.B. Montanwachs, Amidwachs wie Rhenax® und/oder Oligoethylene verwendet werden. Als Weichmacher kommen z.B. aliphatische oligomere Polyester in Frage (s. EP 29 931 und DE 27 06 128).

Als Schlagzähmodifikatoren sind insbesondere Kautschuke wie Butadien-Acrylnitril-Copolymerisate, Butadien-Styrol-Copolymerisate, Butadien-Isopren- bzw. Butadien-Styrol-Blockcopolymerisate, Alkylacrylatkautschuke, EP- und EPDM-Kautschuksysteme sowie Silikonkautschuke geeignet. Vorzugsweise werden als Kautschukkomponente Pfropfkautschuke eingesetzt, bei denen Vinylmono- oder Copolymerisate auf einem der vorgenannten Kautschuksysteme aufgepfropft sind, wobei die Glastemperatur der Pfropfgrundlage unterhalb -10 ° C liegen sollte.

Die Herstellung der Mischungen aus thermoplastischem Polyalkylenterephthalat, Phosphorverbindungen, Antidripping-Mittel, Thermoplasten mit überwiegend aromatischer Hauptkette und hoher Wärmeformbeständigkeit (Vicat B ≥180 ° C) und gegebenenfalls Verstärkungsmitteln sowie Verarbeitungshilfsmitteln kann in den üblichen Mischaggregaten, wie Walzen, Knetern, Ein- und Mehrwellenextrudern, erfolgen. Die Verarbeitungshilfsmittel können als Konzentrate in thermoplastischen Polyestern in Granulatform oder als Pulvermischung bei dem Compoundierung der Komponenten zudosiert werden.

Das Herstellungsverfahren kann sowohl diskontinuierlich als auch kontinuierlich unter Bedingungen durchgeführt werden, bei denen eine Oxidation weitgehend ausgeschlossen ist, d.h. unter Schutzgasatmosphäre. Als Schutzgas eignet sich z.B. Stickstoff, Kohlendioxid und/oder Argon.

Die thermoplastische Verarbeitung der erfindungsgemäßen Formmassen zu Formkörpern kann bei Massetemperaturen bis 40 ° C oberhalb das Polyesterschmelzpunktes (250-290 ° C) und bei Schmelzestandzeiten bis zu 9 Minuten (1-9 min) erfolgen. Bevorzugt werden Verarbeitungsbedingungen gewählt, bei denen die Massetemperaturen nicht höher als 270 ° C und die Schmelzestandzeiten nicht höher als 9 min sind. Bei den besonders bevorzugten Verarbeitungsbedingungen liegen die Massetemperaturen nicht höher als 260 ° C und die Schmelzestandzeiten nicht höher als 6 min.

Die Polymermischungen können gegebenenfalls einer thermischen Nachbehandlung in der festen Phase bei Temperaturen von 100 bis 200, bevorzugt 180 bis 210 ° C, unterzogen werden.

Die erfindungsgemäßen flammgeschützten Polyalkylenterephthalatformmassen können verwendet werden für die Herstellung von Formkörpern aller Art, Fasern oder Filmen.

Durch die Kombination der zuzugebenden hochwärmeformbeständigen Thermoplasten mit dem Polyphosphonsäureester wird der Phosphorgehalt in den Massen beträchtlich gesenkt. Dies überrascht umso

mehr, da durch alleinige Zugabe von hochwärmeformbeständigen Thermoplasten der genannten Art zu Polyalkylenterephthalaten die technisch geforderte Klassifikation nach UL-94 nicht erreicht wird. Es mußte daher auch erwartet werden, daß eine Kombination der hochwärmeformbeständigen Thermoplasten mit den genannten Phosphonaten nicht über die flammhemmende Wirkung der Phosphonate hinausgehen würde. Es war daher umso überraschender, daß bei einer solchen Kombination ein synergistischer Effekt im Hinblick auf hohe Flammwidrigkeit (UL-94/V 0/1,6 mm) der Polymermassen erreicht wird, was sich durch einen geringeren Phosphorgehalt in den Polymermassen ausdrückt (siehe Beispiele).

Beispiele

A. Eingesetzte Komponenten

I. Polyethylenterephthalat mit einer Intrinsic-Viskosität von 1,20 dl/g, gemessen in Phenol/o-Dichlorbenzol-Gemisch (Gewichtsverhältnis 1:1), 25° C, Ubbelohde-Viskosimeter (Granulat),

II. Polybutylenterephthalat mit einer Intrinsic-Viskosität von 1,20 dl/g, bestimmt, wie unter I. beschrieben (Granulat),

III. Bisphenol-F-poly-methylphosphonat (niedermolekular, pulverförmig),

IV. Polyphenylensulfid ungetempertes Material, frei von Zusatzstoffen, Schmelzfluß: 4.000-6.000 g/10 min. [MFI (melting flow index) nach ASTM D 1238, bestimmt bei 316° C, Auflagegewicht: 5 kg].

V. Polyethersulfon aus 4,4'-Dihydroxydiphenylsulfon und 4,4'-Dichlordiphenylsulfon mit einer Intrinsic-Viskosität von 0,38 dl/g, gemessen in Dimethylformamid, 25° C, Ubbelohde-Viskosimeter,

VI. Poly-2,6-dimethyl-phenylenoxid mit einer Intrinsic-Viskosität von 0,42 dl/g, gemessen in Chloroform, 25° C, Ubbelohde-Viskosimeter,

VII. Polytetrafluorethylen-Pulver, Hostaflon TF 2027 der Firma Hoechst AG,

VIII. Kurzglasfaser, Typ OCF 429 YZ, der Owens Corning, Italien,

IX. E-Wachs (pulverförmig),

X. Bariumsulfat, Blanc fix micro der Sachtleben AG,

XI. oligomeres Carbonat aus Tetrabrombisphenol A, Great Lakes BC-52-HP der Firma Great Lakes Chem. Corp., USA.

B. Herstellung des Polymethylphosphonats von Bisphenol F

400,48 g Bisphenol F (2,00 Mol),
501,40 g Methanphosphonsäurediphenylester (2,02 Mol) und
0,58 g Natriumphenolat (0,005 Mol)
werden unter Stickstoff bei 250° C intensiv in einem Autoklaven vermischt. Innerhalb von 3 h wird unter einem von 250 auf 100 mbar absinkenden Vakuum und bei einer von 250° C auf 265° C ansteigenden Temperatur Phenol über eine auf 100° C beheizte Kolonne abdestilliert. Anschließend wird die Umesterung 5 h unter einem allmählich auf 0,3 mbar absinkenden Druck und einer auf 310° C ansteigenden Temperatur fortgesetzt, wobei die Viskosität der Schmelze ansteigt. Man belüftet mit Stickstoff, läßt das Polymer bei stillstehendem Rührer absitzen und nimmt nach Abkühlen die erstarrende Schmelze in Methylenchlorid auf. Nach gründlichem Auswaschen mit Wasser und Abdampfen des Lösungsmittels erhält man eine Schmelze, die nach Abkühlen in einer Mühle zerkleinert wird. Die Ausbeute beträgt 500, 39 g Produkt. Es hat eine relative Viskosität $\eta_{rel}$ von 1,10 (gemessen in Methylenchlorid; 0,5 g/100 ml Lösung).

C. Herstellung, Verarbeitung und Prüfung der Formmassen

Die eingesetzten Komponenten werden in den in Tabelle 1 angegebenen Mengen in einem Zweiwellenextruder geschmolzen, vermischt und zu Strängen extrudiert und granuliert. Die Herstellung der Formmassen kann z.B. mit einem Extruder, ZSK 32 der Firma Werner & Pfleiderer, bei Massetemperaturen von 270 bis 280° C und bei einer Schneckendrehzahl von 130 U/min sowie einem Durchsatz von 8 kg/h erfolgen.

Nach ausreichender Trocknung (z.B. 3 bis 4 h bei 120° C) werden die Formmassen auf üblichen Spritzgießmaschinen bei Massetemperaturen von 250 bis 270° C, einer Formtemperatur von 80 bis 130° C und einer Schmelzestandzeit von nicht länger als 9 min zu Formkörpern bzw. Normprüfstäben verspritzt und folgenden Tests unterzogen:

- Bestimmung des Phosphorgehalts (Elementaranalyse, %P),
- visuelle Beurteilung des Tropfverhaltens,
- Brandtest nach Vorschrift Underwriter Laboratories (UL 94).

Tabelle 2 zeigt die erhaltenen Prüfdaten.

Tabelle 1 Eingesetzte Komponenten (Angaben in Gew.-%)

| Komponente | I. | II. | III. | IV. | V. | VI. | VII. | VIII. | IX. | X. | XI. |
|---|---|---|---|---|---|---|---|---|---|---|---|
| Vergleich 1 | 62,3 | | 15,0 | | | | 0,4 | 20,0 | 0,3 | 2,0 | |
| Vergleich 2 | | 52,2 | 25,0 | | | | 0,4 | 20,0 | 0,3 | | |
| Beispiel 1 | 57,3 | | 10,0 | 10,0 | | | 0,4 | 20,0 | 0,3 | 2,0 | |
| Beispiel 2 | 57,3 | | 10,0 | | 10,0 | | 0,4 | 20,0 | 0,3 | 2,0 | |
| Beispiel 3 | 56,3 | | 5,0 | 10,0 | | | 0,4 | 20,0 | 0,3 | 2,0 | 6,0 |
| Beispiel 4 | 56,3 | | 5,0 | | 10,0 | | 0,4 | 20,0 | 0,3 | 2,0 | 6,0 |
| Beispiel 5 | | 53,3 | 10,0 | 10,0 | | | 0,4 | 20,0 | 0,3 | | 6,0 |
| Beispiel 6 | | 53,3 | 10,0 | | 10,0 | | 0,4 | 20,0 | 0,3 | | 6,0 |
| Beispiel 7 | | 53,3 | 10,0 | | | 10,0 | 0,4 | 20,0 | 0,3 | | 6,0 |

Tabelle 2 Prüfdaten

| | Gew.-% Phosphor | Tropfverhalten | Brandverhalten UL 94/1,6 mm |
|---|---|---|---|
| Vergleich 1 | 1,8 | tropft nicht | V-0* |
| Vergleich 2 | 3,0 | tropft nicht | V-0* |
| Beispiel 1 | 1,2 | tropft nicht | V-0 |
| Beispiel 2 | 1,2 | tropft nicht | V-0 |
| Beispiel 3 | 0,6 | tropft nicht | V-0 |
| Beispiel 4 | 0,6 | tropft nicht | V-0 |
| Beispiel 5 | 1,2 | tropft nicht | V-0 |
| Beispiel 6 | 1,2 | tropft nicht | V-0 |
| Beispiel 7 | 1,2 | tropft nicht | V-0 |

* mit geringerer Phosphormenge wird die Klassifikation V-0 nicht mehr erreicht

Aus den Beispielen 1 bis 7 der Tabelle 1 und 2 geht hervor, daß die erfindungsgemäße Mischung mit Phosphonsäureestern von Bisphenolen, Thermoplasten mit überwiegend aromatischer Hauptkette und mit hoher Wärmeformbeständigkeit (Vicat B ≧180 °C) sowie Antidripping-Mitteln thermoplastischen Polyestern einen Flammschutz vermittelt, dem die Beurteilung V-0 nicht tropfend nach UL 94 bei 1,6 mm dicken Prüfkörpern zukommt. Die Mitverwendung von Thermoplasten mit überwiegend aromatischer Hauptkette und hoher Wärmeformbeständigkeit (Vicat B ≧180 °C) erlaubt eine deutliche Verringerung der für V-0/1,6 mm nach UL 94 benötigten Mengen an erfindungsgemäßen phosphorhaltigen Verbindungen. Die Mitverwendung von weiteren Halogenverbindungen erlaubt eine weitere Verringerung der für V-0/1,6 mm benötigten Menge an erfindungsgemäßen Phosphonsäureestern.

## Patentansprüche

1. Flammgeschützte, nicht tropfende Polyalkylenterephthalatformmassen, die auf 100 Gew.-Teile dieser Formmassen neben Polyalkylenterephthalat

   A) 5 bis 30 Gew.-Teile Polyphosphonsäureester der Formel

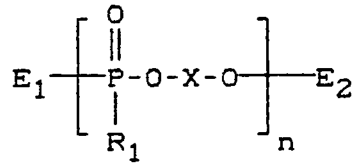

,

worin

$R_1$ für $C_1$- bis $C_6$-Alkyl oder $C_6$- bis $C_{10}$-Aryl steht,

X für die Formel

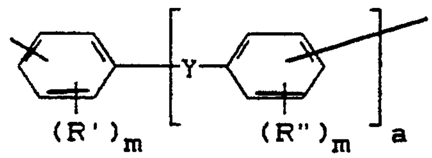

steht,
in der
R' und R"
gleich oder verschieden sind und für $C_1$- bis $C_4$-Alkyl oder -Alkoxy stehen,
Y
eine Einfachbindung ist oder $C_1$- bis $C_3$-Alkylen, gegebenenfalls niederalkylsubstituiertes $C_5$- bis $C_{12}$-Cycloalkylen oder O, S, CO, $SO_2$ bedeutet,
m
für Null oder ganze Zahlen von 1 bis 4 steht und
a
0 oder 1 bedeutet,

$E_1$ für $-OR_2$, -OH, -O-X-OH steht, wobei
$R_2$
für $C_6$- bis $C_{10}$-Aryl steht und X die obengenannte Bedeutung besitzt,

$E_2$ Wasserstoff,

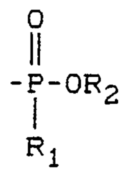 oder 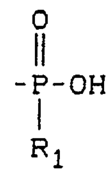

bedeutet,
wobei
$R_1$ und $R_2$ die obengenannte Bedeutung haben, und

n für ganze Zahlen von 2 bis 100 steht,

B) 0,2 bis 2 Gew.-Teile eines Antidripping-Mittels und

C) 1 bis 30 Gew.-Teile eines Thermoplasten mit überwiegend aromatischer Hauptkette und hoher Wärmeformbeständigkeit (Vicat B ≧180 °C) enthalten.

**2.** Flammgeschützte Polyalkylenterephthalat-Formmassen gemäß Anspruch 1, dadurch gekennzeichnet, daß als Antidripping-Mittel Tetrafluorethylen-Polymerisate eingesetzt werden.

**3.** Flammgeschützte Polyalkylenterephthalat-Formmassen nach Ansprüchen 1 und 2, dadurch gekennzeichnet, daß als Thermoplasten (Komponente C) Polysulfone, Polyethersulfone, Polyketone, Polyetherketone, Polyphenyloxide und/oder Polyarylensulfide eingesetzt werden.

**4.** Verwendung der flammgeschüzten Polyalkylenterephthalat-Formmassen zur Herstellung von Formkörpern der verschiedensten Art.

Europäisches Patentamt

# EUROPÄISCHER RECHERCHENBERICHT

Nummer der Anmeldung

**EP 90 12 3540**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | US-A-4 033 927 (W.F.H. BORMAN)<br>* Spalte 12, Beispiele 2-4; Spalte 17, Zeilen 7-16; Anspruch 1 *<br>– – – | 1-4 | C 08 K 5/5333<br>C 08 L 67/02 //<br>(C 08 L 67/02<br>C 08 L 27:18<br>C 08 L 101:00 )<br>(C 08 L 67/02<br>C 08 L 27:18<br>C 08 L 85:02<br>C 08 L 101:00 ) |
| A | EP-A-0 246 016 (CELANESE)<br>* Seite 2, Zeilen 36-51; Seite 5, Tabelle 1; Ansprüche 1,10 *<br>– – – | 1-4 | |
| A | EP-A-0 162 382 (BAYER)<br>* Seite 2, Zeile 10 - Seite 3, Zeile 4; Seite 19, Zeilen 10-13; Ansprüche 1-5 *<br>– – – | 1-4 | |
| A | US-A-4 140 671 (S.C. COHEN)<br>* Spalte 2, Zeile 8-23; Spalte 5, Beispiele 3-6, Tabelle 1; Ansprüche 1,4,7,10 *<br>– – – – – | 1-4 | |
| | | | **RECHERCHIERTE SACHGEBIETE (Int. Cl.5)** |
| | | | C 08 K<br>C 08 L |

Der vorliegende Recherchenbericht wurde für alle Patentansprüche erstellt

| Recherchenort | Abschlußdatum der Recherche | Prüfer |
|---|---|---|
| Den Haag | 27 Mai 91 | SIEMENS T. |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument